(19) **Europäisches Patentamt** / **European Patent Office** / **Office européen des brevets**

(11) **EP 4 468 256 B1**

(12) **EUROPEAN PATENT SPECIFICATION**

(45) Date of publication and mention of the grant of the patent:
**04.03.2026 Bulletin 2026/10**

(21) Application number: **23742853.7**

(22) Date of filing: **16.01.2023**

(51) International Patent Classification (IPC):
*G06T 5/50* (2006.01)    *G06T 5/70* (2024.01)
*G06T 7/254* (2017.01)    *G06T 7/246* (2017.01)
*H04N 23/68* (2023.01)    *G06V 20/40* (2022.01)
*G06T 5/60* (2024.01)    *G06N 3/088* (2023.01)
*G06N 3/045* (2023.01)    *G06T 5/73* (2024.01)
*G06T 7/269* (2017.01)    *G06T 7/277* (2017.01)
*G06N 3/08* (2023.01)

(52) Cooperative Patent Classification (CPC):
**G06N 3/088; G06N 3/045; G06N 3/08; G06T 5/50; G06T 5/60; G06T 5/70; G06T 5/73; G06T 7/246; G06T 7/254; G06T 7/269; G06T 7/277; H04N 23/6811; H04N 23/682; H04N 23/683;**
G06T 2207/10016;            (Cont.)

(86) International application number:
**PCT/CN2023/072397**

(87) International publication number:
**WO 2023/138538 (27.07.2023 Gazette 2023/30)**

(54) **VEHICLE-MOUNTED VIDEO IMAGE STABILIZATION METHOD AND APPARATUS, VEHICLE AND STORAGE MEDIUM**

VERFAHREN UND VORRICHTUNG ZUR STABILISIERUNG VON FAHRZEUGMONTIERTEN VIDEOBILDERN, FAHRZEUG UND SPEICHERMEDIUM

PROCÉDÉ ET APPAREIL DE STABILISATION D'IMAGE VIDÉO MONTÉE SUR VÉHICULE, VÉHICULE ET SUPPORT DE STOCKAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.01.2022 CN 202210055801**

(43) Date of publication of application:
**27.11.2024 Bulletin 2024/48**

(73) Proprietor: **Great Wall Motor Company Limited**
**Hebei 071000 (CN)**

(72) Inventors:
• **JIA, Lanpeng**
  **Baoding, Hebei 071000 (CN)**
• **FAN, Qiang**
  **Baoding, Hebei 071000 (CN)**
• **DIAO, Yue**
  **Baoding, Hebei 071000 (CN)**
• **XIE, Yi**
  **Baoding, Hebei 071000 (CN)**
• **ZHAO, Long**
  **Baoding, Hebei 071000 (CN)**
• **CHEN, Xianling**
  **Baoding, Hebei 071000 (CN)**

(74) Representative: **Klunker IP**
**Patentanwälte PartG mbB**
**Destouchesstraße 68**
**80796 München (DE)**

(56) References cited:
CN-A- 106 550 173    CN-A- 108 564 554
CN-A- 108 564 554    CN-A- 111 614 895
CN-A- 112 804 561    CN-A- 112 954 134
CN-A- 115 115 964    US-A1- 2017 213 078
US-A1- 2019 019 298

• JIN J S ET AL: "DIGITAL VIDEO SEQUENCE STABILIZATION BASED ON 2.5D MOTION ESTIMATION AND INERTIAL MOTION FILTERING", REAL-TIME IMAGING, ACADEMIC PRESS LIMITED, GB, vol. 7, no. 4, 1 August 2001 (2001-08-01), pages 357 - 365, XP001124989, ISSN: 1077-2014, DOI: 10.1006/RTIM.2000.0243

(52) Cooperative Patent Classification (CPC): (Cont.)
G06T 2207/20081; G06T 2207/20084;
G06T 2207/20182; G06T 2207/20201;
G06T 2207/30252

**Description**

TECHNICAL FIELD

The present invention pertains to the field of image processing technologies, and more particularly, to a vehicle-mounted video stabilization method, a vehicle and a storage medium.

BACKGROUND

Currently, vehicle-mounted video recording functions are widely used, various models of vehicles have related devices. In a video recording process, encountering of a situation of road bump is inevitable, which requires a function of image stabilization. Image stabilization is divided into two paths, one path is a holder-based hardware image stabilization method, and the other path is an idea of pure software solution.

In the related art, key points of the image are usually extracted by using a neural network, a motion matrix is estimated for the whole image, an accuracy of motion estimation is low, and a problem of bad video stabilization processing effect is caused.

XP001124989, JIN J S et al., in "DIGITAL VIDEO SEQUENCE STABILIZATION BASED ON 2.5D MOTION ESTIMATION AND INERTIAL MOTION FILTERING" REAL-TIME IMAGING, ACADEMIC PRESS LIMITED, GB, vol. 7, no. 4, 1 August 2001, pages 357-365, ISSN: 1077-2014, relates to stabilization of digital video sequences. A 2.5D inter-frame motion model is proposed so that the stabilization system can perform in the situations where significant depth changes are present and the camera has both rotation and translation. Inertial motion filtering is proposed in order to eliminate the vibration of the video sequences with enhanced perceptual properties. The implementation of this new approach integrates four modules: pyramid-based motion detection, 2.5D motion parameter estimation, inertial motion filtering and affine-based motion compensation. The stabilization system can smooth unwanted vibrations or shakes of video sequences and achieves a real-time speed.

SUMMARY

One of the objectives of the present invention is providing a vehicle-mounted video stabilization method, a vehicle and a storage medium, which can improve an accuracy of motion estimation of the neural network on the video image, thereby improving a processing effect of the video having stabilized images.

TECHNICAL SOLUTIONS

The object is achieved by the features of independent claim 1 regarding vehicle-mounted video stabilization method, by the features of independent claim 9 regarding the vehicle, and by the features of independent claim 10 regarding the storage medium. Further embodiments are defined in the respective dependent claims.

BENEFICIAL EFFECTS

The vehicle-mounted video stabilization method provided by the present invention has the following beneficial effects: the vehicle-mounted video of the vehicle is obtained; the vehicle-mounted video is input into a first neural network to obtain a plurality of grid-shaped first motion vector graphs, the first motion vector graph is used for representing a corresponding offset vector of each grid of the next frame of image of every two adjacent frame images in the vehicle-mounted video with respect to each grid of the previous frame of image of the every two adjacent frame images; the smoothing processing is performed on the first motion vector graph to obtain the processed second motion vector graph; obtaining the first motion optical flow graph by calculation according to the second motion vector graph, where the first motion optical flow graph is used for representing a corresponding motion displacement of each pixel point of the next frame of image of every two adjacent frames of images in the vehicle-mounted video with respect to each pixel point of the previous frame of image; the motion compensation is performed on the frame image in the vehicle-mounted video according to the first motion optical flow graph to obtain the video with stable images. The first neural network is used to estimate a grid-shaped motion vector graph in a grid manner, and the image stabilization processing is performed on the vehicle-mounted video through the grid-shaped motion vector graph. On the basis of implementation of endto-end motion estimation, the original single motion matrix estimation method is extended to planar grid. Thus, the accuracy of motion estimation of the neural network on the video is improved, and the processing effect of video stabilization is improved.

DESCRIPTION OF THE DRAWINGS

In order to describe the present invention more clearly, a brief introduction regarding the accompanying drawings that need to be used for describing the present invention or the demonstrated technologies is given below.

FIG. 1 illustrates a schematic flowchart of a vehicle-mounted video stabilization method;

FIG. 2 illustrates a schematic diagram of intuitive representation of a smoothing process of a step S203 in FIG. 1;

FIG. 3 illustrates a schematic flowchart of a specific implementation step of a step S204 in FIG. 2;

FIG. 4 illustrates a schematic structural diagram of a vehicle video stabilization apparatus;

FIG. 5 illustrates a schematic structural diagram of a vehicle.

DETAILED DESCRIPTION OF EMBODIMENTS

In the following descriptions, in order to describe but not intended to limit the present invention, concrete details including specific system structure and technique are proposed to facilitate a comprehensive understanding of the present invention. Detailed explanations of method, circuit, device and system well known to the public are omitted, and thus unnecessary details which disturb the description of the present invention are avoided.

It should be understood that, when a term "comprise" is used in the description and annexed claims, the term "comprise/include" indicates existence of the described characteristics, integer, steps, operations, elements and/or components, but not exclude existence or adding of one or more other characteristics, integer, steps, operations, elements, components and/or combination thereof.

As is used in the description and the annexed claims, a term "if" may be interpreted as "when" or "once" or "in response to determination" or "in response to detection". Similarly, terms such as "if it is determined that", or "if it is detected that (a described condition or event)" may be interpreted as "once it is determined" or "in response to the determination" or "once it is detected that (the described condition or event)" or "in response to the detection (the described condition or event)".

In addition, in the descriptions of the present application, terms such as "first" and "second", "third", etc., are only used for distinguishing purpose in description, but shouldn't be interpreted as indication or implication of a relative importance.

The terms "comprising", "including", "having" and their variations mean "including but is not limited to", unless otherwise they are specially emphasized in other manner.

The vehicle-mounted video stabilization method of the present invention needs to use a first neural network, and the first neural network is a pre-trained network. Thus, before describing method for image stabilization of the vehicle-mounted video i in detail, a training process of the first neural network is first described, where a training process of the first neural network is described below:

In a step of S 101, a training data set is obtained, the training data set includes a plurality of data pairs, each data pair includes a first image and a second image, where the second image has jitter relative to the first image.

It should be noted that an image content of the first image and an image content of the second image are consecutive. Optionally, the first image and the second image may be two adjacent frames of images in one sample video, where the second image is a next frame of image in two adjacent frames of images, and the first image is a previous frame of image in the two adjacent frames of images.

In a step of S102, an unsupervised neural network is trained based on the training data set to obtain a trained first neural network.

Here, the unsupervised neural network is a neural network that does not need to be assigned with a category (label), but only needs to be provided with an input.

In one possible implementation manner, an implementation process of the step S102 may include:

in a step of S1021, the first image and the second image in the data pair are input into the unsupervised neural network to obtain a grid-shaped third motion vector graph. The third motion vector graph is used to represent a corresponding offset vector of each grid of the second image with respect to each grid of the first image.

Here, the first image and the second image are input into the unsupervised neural network, a grid graph having a total number of $S \times S$ grids is constructed between the first image and the second image, where one S represents the number of rows of the grid graph, the other S represents the number of columns of the grid graph, each grid will regress four motion vectors $\Delta_{i,j}$, where $i \in [0,S)$, $j \in [0,S)$, i represents the row number of the grid graph, j represents the column number of the grid graph, finally, a grid-shaped third motion vector graph is output. The third motion vector graph is a three-dimensional motion matrix of S×S×3, where each dimension in the three-dimensional motion matrix of S×S×3 represents motion offsets in x direction, y direction and z direction.

In a step of S1022, a second motion optical flow graph is calculated according to the third motion vector graph. The second motion optical flow graph is used to represent a corresponding motion displacement of each pixel point of the second image with respect to each pixel point of the first image.

In one possible implementation manner, the implementation process of the step S1022 may include:

In a step of S1, a linear transformation is performed on the third motion vector graph to obtain a homography matrix of each grid in the third motion vector graph.

Here, the linear transformation is performed on the four motion vectors corresponding to each grid in the third motion vector graph, and the homography matrix of each grid in the third motion vector graph is obtained by calculation.

In a step of S2, a first motion optical flow graph is obtained by calculation according to the homography matrix of each grid in the third motion vector graph.

Specifically, aiming at each grid in the third motion vector graph, the homogeneous coordinates corresponding to the plurality of pixel points included in the grid projected on the image are obtained; the second motion optical flow graph is calculated according to the homography matrix of the grid and the homogeneous coordinates corresponding to the plurality of pixel points included in the grid projected on the image.

By virtue of the above-mentioned processing process, the homography matrix of the sparse grid is used to approximate the global optical flow graph (i.e., the second motion optical flow graph), a calculation amount may be reduced, and an operating speed may be increased.

In a step of S1023, a bilinear interpolation operation is performed on the second image according to the second motion optical flow graph to obtain a third image after motion of the second image.

It should be noted that, based on the second motion optical flow graph, the bilinear interpolation operation is performed on the second image to obtain the third image after the motion of the second image, that is, the motion compensation on the second image. That is, the motion displacement (i.e., the second motion optical flow graph) of the estimated second image relative to the first image is obtained. The motion displacement of the second image with respect to the first image is used to correct the second image to obtain the third image. Here, the third image needs to be similar to the first image as much as possible to achieve an image stabilization effect, Thus, the unsupervised neural network needs to be continuously optimized by calculating a loss value between the first image and the third image, thereby obtaining an accurate motion estimation.

At step S1024, a loss value between the first image and the third image is calculated.

Here, the loss value between the first image and the third image may be calculated by using the following formula (1), which is expressed as:

$$\mathrm{L1} = \sum_i^M \sum_j^N \left| A_{i,j} - B'_{i,j} \right| \qquad (1)$$

$A_{i,j}$ represents a value of a pixel in a i-th row and a j-th column in the first image, $B'_{i,j}$ represents a value of a pixel in the i-th row and the j-th column in the third image, i represents a row number of an image pixel, j represents a column number of the image pixel, M represents the total number of rows of the image pixel, N represents the total number of columns of the image pixel, and L1 represents the loss value between the first image and the third image.

At step S1025, a network parameter of the unsupervised network is updated based on the loss value to obtain the first neural network.

In this step, after the network parameter of the unsupervised network are updated based on the loss value, if the loss value of the updated unsupervised network is less than the preset threshold, and the loss value of the currently updated unsupervised network is equal to the loss value of the unsupervised network updated last time, the currently updated unsupervised network is determined as the first neural network, otherwise, the step S1024 and the subsequent steps are executed again until the loss value of the updated unsupervised network is less than the preset threshold, and the loss value of the currently updated unsupervised network is equal to the loss value of the unsupervised network updated last time. Alternatively, after the network parameter of the unsupervised network is updated based on the loss value, the number of times of updating of the network parameter is determined. If the number of times of updating of the network parameter reaches a preset number of times, the currently updated unsupervised network is determined as the first neural network; otherwise, the step S1024 and the subsequent steps are executed, until the number of times of updating of the network parameter corresponding to the currently updated unsupervised network reaches the preset number of times, the updated unsupervised network is determined as the first neural network.

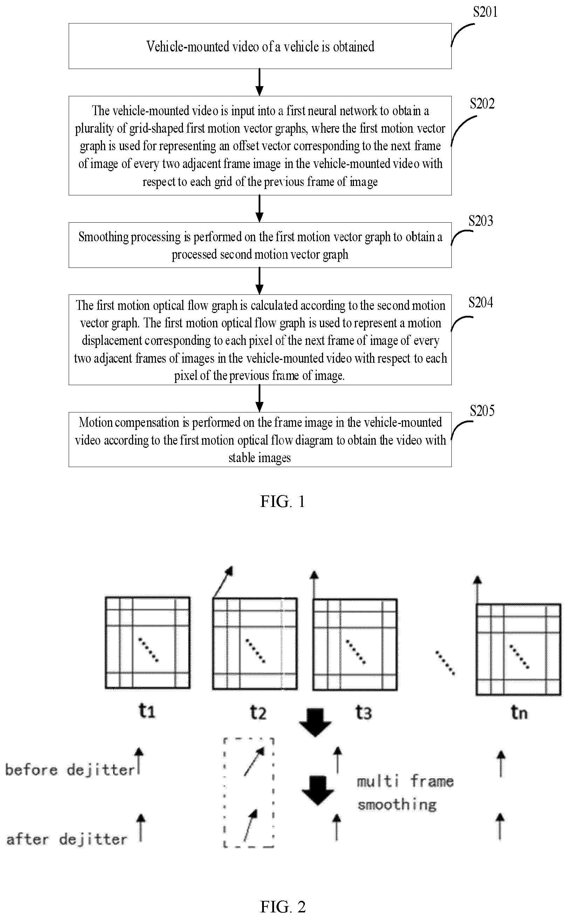

FIG. 1 illustrates a schematic flowchart of a vehicle-mounted video stabilization method according to the present invention. With reference to FIG. 1, the vehicle-mounted video stabilization method includes steps S201-S205. The vehicle-mounted video stabilization method are described in detail below:

In a step of S201, a vehicle-mounted video of a vehicle is obtained.

Here, the vehicle-mounted video of the vehicle may be obtained by a video recording device mounted on the vehicle.

In a step of S202, the vehicle-mounted video is input into a first neural network to obtain a plurality of grid-shaped first motion vector graphs, where the first motion vector graph is used for representing a corresponding offset vector of each grid of the next frame of image of every two adjacent frame image in the vehicle-mounted video with respect to each grid of the previous frame of image of the every two adjacent frame image.

Here, the first neural network is a pre-trained neural network. Regarding the details of the specific training process, reference can be made to the above descriptions, the details of the specific training process are not repeatedly described herein.

It should be noted that every two adjacent frames of images in the vehicle-mounted video output one grid-shaped first motion vector graph is obtained through the first neural network. For example, the vehicle-mounted video includes N frames of images, the N frames of images are input into the first neural network. The first frame of image and the second frame of image correspond to one grid-shaped first motion vector graph, the second frame of image and the third frame of image correspond to one grid-shaped first motion vector graph, and the like. Thus, N-1 grade-shaped first motion vector graph are obtained.

In a step of S203, a smoothing processing is performed on the first motion vector graph to obtain a processed second motion vector graph.

It should be noted that the smoothing processing is performed on the first motion vector graph, in order to remove obvious jitter of the frame image and ensure the consistency of motion trends of the whole vehicle-mounted video.

The implementation process of the step S203 includes a step S2031 and a step S2032.

In the step of S2031, aiming at each frame of image of the vehicle-mounted video, first motion vector graphs respectively corresponding to the previous and subsequent K frames of images of the current frame of image are obtained, where, K is a positive integer.

In the step of S2032, a weighted fusion calculation is performed on the first motion vector graphs respectively corresponding to the previous and subsequent K frames of images of the current frame image to obtain a second motion vector graph.

Specifically, the second motion vector graph may be calculated by using a formula (2), which is expressed as:

$$I_{t_k} = \frac{1}{\sum_{t=-K}^{K} w_{t_k+t}} * \sum_{t=-K}^{K} w_{t_k+t} * \Delta_{t_k+t}$$

In this formula, $w_{t_k+t}$ represents a weight conforming to Gaussian distribution, $w_{t_k+t}$ represents an influence of the previous frame image and the subsequent frame image of the current frame image on the current frame image, where the farther the frame image is away from the current frame image, the smaller the impact of the frame image on the current frame, -K represents a K-th frame of image prior to the current frame, K represents the K-th frame of image subsequent to the current frame, $\Delta_{t_k}$ represents a motion vector of the current frame image $t_k$, that is, the various motion vectors corresponding to the first motion vector graph, $\Delta_{t_k+t}$ represents a motion vector of the frame image $t_k + t$, and $I_{t_k}$ represents the second motion vector graph of the current frame image.

The smoothed second motion vector graphs corresponding to all frame images of the vehicle-mounted video are obtained through the aforementioned processing.

For the convenience of interpretation, the smoothing process is shown with reference to FIG. 2. Assuming that the motion trend of the whole vehicle-mounted video is directly above, the motion vector of the upper left corner point in the grid of the first motion vector graph is merely shown herein. It can be seen from the figure that a $t_2$-th frame of image has obvious jitter, the motion vector is offset. The offset of the motion vector is corrected by utilizing the smoothing processing of the previous and subsequent multiple frames.

In a step of S204, the first motion optical flow graph is calculated according to the second motion vector graph. The first motion optical flow graph is used to represent a corresponding motion displacement of each pixel of the next frame of image of every two adjacent frames of images in the vehicle-mounted video with respect to each pixel of the previous frame of image.

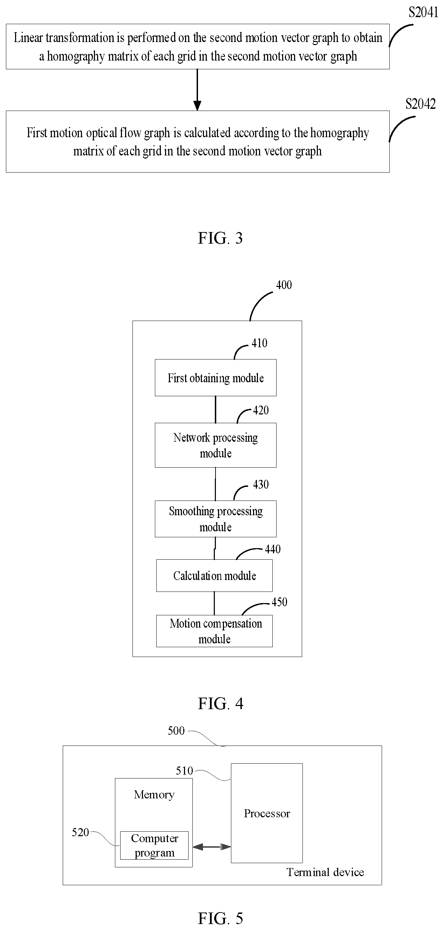

Referring to FIG. 3, the implementation process of the step S204 includes a step S2041 and a step S2042.

At step 2041, a linear transformation is performed on the second motion vector graph to obtain a homography matrix of each grid in the second motion vector graph.

At step 2042, a first motion optical flow graph is calculated according to the homography matrix of each grid in the second motion vector graph.

The step 2042 specifically includes:

Homogeneous coordinates corresponding to the plurality of pixel points included in the grid projected onto the image are obtained for each grid in the second motion vector graph, and the first motion optical flow graph is obtained by calculation according to the homography matrix of the grid and the homogeneous coordinates corresponding to the plurality of pixel points included in the image projected onto the image.

By performing the abovementioned processing process, the homography matrix of the sparse grid is used to approximate the global optical flow graph (i.e., the first motion optical flow graph), the calculation amount can be reduced, and the operating speed can be increased.

**In** a step of S205, motion compensation is performed on the frame image in the vehicle-mounted video according to the first motion optical flow graph to obtain the video with stable images.

Specifically, with regard to each frame of image in the vehicle-mounted video, motion compensation is performed on the frame image according to the corresponding first motion optical flow graph to obtain the video with stable images, which is consisted of compensated frame images.

The inventor further found that using an unified model to train all different motion blurs is not suitable for all vehicle driving conditions. For example, the inventor found that when the vehicle speed of the vehicle is different, the jitter of the vehicle is different, and the degree of jitter of the captured vehicle-mounted video is also different. **In** this condition, when the above-mentioned trained model is still used for processing, it is quite possible that the vehicle-mounted videos with different jitter degrees have poor processing effects. Aiming at this technical problem, according to the present invention different neural networks are obtained by training for different ranges of moving speed, that is, different moving ranges correspond to different neural networks. Thus, the camera equipment can capture different vehicle-mounted videos at different moving speeds, and a vehicle-mounted video captured at a moving speed is input into a neural network corresponding to the moving speed to be processed, that is, the vehicle-mounted videos having different degrees of jitter can be input into different neural networks to be processed, an image stabilization effect is improved. To this effect, the vehicle-mounted video stabilization method provided of the present invention further includes a step S601 and a step S602, which are described in detail below:

**In** the step of S601, a target moving speed is obtained.

The target moving speed is moving speed of a photographing device for photographing the vehicle-mounted video when the vehicle-mounted video is photographed. **In a** practical application, when a user sits on a position in a transportation tool (e.g., a train, a trolley, or a bus) in a driving state, the user may record a scenery outside. Since the transportation tool is in the driving state, the captured video may have jitter. Therefore, the user may submit a video dejitter request to a terminal device.

It should be noted that the terminal device detects that the user submits the video dejitter request may be: detecting that the user opens a preset APP or detecting that the user performs a preset operation in the preset APP. The preset operation may be determined according to the actual requirement, which is not limited herein. For example, the preset operation may be clicking a preset control. That is, if the terminal device detects that the user clicks a preset control in the preset APP, the terminal device considers that the preset operation is detected, that is, the terminal device considers that the user sends the video dejitter request.

The preset operation may also be a time trigger operation, the terminal device may be configured with a corresponding video processing flow during operation, this video processing flow includes trigger nodes of a plurality of key events, and the key events include the video dejitter request. In this condition, when the terminal device detects the trigger node associated with the video dejitter event, the operation of this solution is executed to obtain the video with stable images.

After detecting the video dejitter request, the terminal device may obtain the vehicle-mounted video and the moving speed of the camera device when the vehicle-mounted video is photographed.

When the user photographs a video on the vehicle in the driving state, the camera device for photographing the vehicle-mounted video may be a camera mounted on the vehicle. On this basis, the terminal device may specifically obtain the moving speed of the corresponding camera when the vehicle-mounted video is photographed by performing the following steps, which are described in detail below:

when the camera photographs the vehicle-mounted video, the driving speed of the vehicle is obtained, and the driving speed of the vehicle is determined as the target moving speed.

The terminal device may be in a wireless communication connection with the camera mounted on the vehicle. Therefore, when detecting that the camera is photographing, the terminal device may obtain the driving speed of the vehicle in real time through a vehicle-mounted system being in wireless communication connection with the terminal device. It should be noted that the vehicle-mounted system includes a wheel speed sensor. The wheel speed sensor may be a magnetoelectric wheel speed sensor or a Hall type wheel speed sensor. The type of the wheel speed sensor is not limited herein.

**In** a step of S602, a neural network matching the target moving speed is searched from the plurality of neural networks, and the matched neural network is used as the first neural network.

The neural network is obtained by training by using the target sample image as a training set. When photographing the target sample image, the speed range which the moving speed of the camera is included in covers the target moving speed.

The terminal device may pre-store a matching relationship between different moving speed ranges and different neural networks. Therefore, after obtaining the target moving speed of the corresponding camera when the vehicle-mounted video is photographed, the terminal device may obtain a neural network matching the target moving speed according to the moving speed range which the target moving speed is included in and the pre-stored matching relationship between different moving speed ranges and different neural networks, and use this neural network as the first neural network for subsequent processing.

Specifically, the matching relationship between different moving speed ranges and different neural networks is established according to the following step S701 and the step S702, which are described in detail below:

In a step of S701, original sample images respectively corresponding to the plurality of preset speed ranges are obtained.

The terminal device may obtain a plurality of images captured by the camera at different moving speeds in advance, and classify the plurality of images according to the plurality of preset speed ranges and a moving speed of each image during photographing, thereby obtaining the original sample images corresponding to the plurality of preset speed ranges.

In the step of S702, with regard to each preset speed range, the neural network corresponding to the preset speed range is obtained by training by using the original sample image corresponding to the preset speed range as the training set.

After obtaining the original sample images respectively corresponding to the plurality of preset speed ranges, in order to improve the subsequent image stabilization effect on the vehicle-mounted video, aiming at any preset speed range, the original sample image corresponding to the preset speed range is only used as the training set, the preset original neural network is trained and the trained neural network corresponding to the preset speed range is obtained. The original image deblurring model may be a preestablished first deep learning model, such as a generative adversarial network (Deblur GAN) model.

In the vehicle-mounted video stabilization method, before inputting the vehicle-mounted video into the first neural network, the method may further include: inputting the vehicle-mounted video into a trained unstable-image-video-classification-model to be processed so as to obtain a probability value that the vehicle-mounted video is an video with unstable images. If the probability value is greater than a preset threshold, a step of inputting the vehicle-mounted video into the first neural network and the subsequent step are executed.In order to determine that the vehicle-mounted video is indeed a video with unstable images, such that the steps S202-S205 can be avoided from being executed on the video with stable images, thereby resulting in useless work of the corresponding processing device.

It should be noted that the unstable-image-video-classification-model is used to detect a probability of whether the vehicle-mounted video is a video with unstable images. The unstable-image-video-classification-model may be obtained by training the preestablished second deep learning model based on the preset sample set. Taking the second deep learning model as a ResNet18 classification model as an example, each piece of sample data in the preset sample set includes a first sample image and a second sample image. The first sample image is a historical video with unstable images, and the second sample image is a historical clear image corresponding to the historical video with unstable images. Through training, the second deep learning model may learn the probability value indicating that all sample images are the video with non-stable image.

In this case, the trained second deep learning model may be used as the unstable image classification model.

After the probability value of the vehicle-mounted video being the video with unstable images is obtained, the probability value may be compared with the preset threshold. The preset threshold may be determined according to the actual requirement, which is not limited herein. Exemplarily, the preset threshold may be 0.9. When detecting that the probability value of the vehicle-mounted video being the video with unstable images is greater than the preset threshold, the vehicle-mounted video may be determined as the video with unstable images. Therefore, the subsequent image stabilization steps are performed. When detecting that the probability value of the vehicle-mounted video being the video with unstable images is less than or equal to the preset threshold, the vehicle-mounted video may be determined as the video with stable images. Thus, there is no need to perform image stabilization processing (i.e., the subsequent image stabilization steps) on the vehicle-mounted video.

It can be learned from the above descriptions that, the obtained vehicle-mounted video is input into the trained unstable image classification model to be processed so as to obtain the probability value of the vehicle-mounted video being the video with unstable images, and the probability value is compared with the preset threshold. The vehicle-mounted video can be determined as the video with unstable images only when detecting that the probability value is greater than the preset threshold. In this condition, the subsequent image stabilization steps are performed, an operating load of the related processing device is alleviated, and an operating efficiency of the related processing device is improved accordingly.

When the image of the vehicle-mounted video is a color image, before inputting the vehicle-mounted video into a trained unstable-image-video-classification-model to be processed, the method may further include: converting the images of the vehicle-mounted video from color images to three channels grayscale images; using a first edge detection algorithm to process the three channels grayscale images to obtain edge images corresponding to the three channels grayscale images, respectively; splicing the edge images with the images in the vehicle-mounted video to obtain an input image of six channels; and inputting the input image of six channels into the unstable-image-video-classification-model to be processed so as to obtain the probability value of the vehicle-mounted video being the video with unstable images.

Since the color image is an RGB three-channel image, the RGB three-channel image may be converted into grayscale images corresponding to the three channels (e.g., a grayscale image corresponding to the R channel, a grayscale image corresponding to a G channel, and a grayscale image corresponding to a B channel) by using an image conversion method. The image conversion method may specifically include: sorting all pixel values corresponding to the three channels in the color image. It may be understood that all pixel values corresponding to the R channel in the vehicle-mounted video may be sequentially sorted to obtain the grayscale image corresponding to the R channel, all pixel values corresponding to the G channel in the vehicle-mounted video may be sequentially sorted to obtain the grayscale image corresponding to the G channel, and all pixel values corresponding to the B channel in the vehicle-mounted video may be sequentially sorted to obtain the grayscale image corresponding to the B channel.

After obtaining the three channels grayscale images corresponding to the vehicle-mounted video, in order to obtain abundant edge information of the vehicle-mounted video, the first edge detection algorithm may be used to process the three channels grayscale images to obtain the edge images respectively corresponding to the three channels grayscale images. The first edge detection algorithm may be a Sobel algorithm.

It should be noted that, since the input of the deep learning model is usually a data format, the pixel values of the color channels of the image in the vehicle-mounted video and the pixel values of the three single channels respectively corresponding to the three edge images that correspond to the image in the vehicle-mounted video may be spliced simultaneously, so as to obtain six-channel data. That is, the images in the vehicle-mounted video and the three channels of edge images are spliced to obtain the six-channel input image.

For example, assuming that a pixel value of a pixel point of an image in the vehicle-mounted video is (25, 17, 24), a pixel value of the pixel point of the vehicle-mounted video in the R channel corresponding to the pixel point in the edge image is 20, the pixel value of the pixel point of the vehicle-mounted video in the G channel corresponding to the pixel point in the edge image is 15, the pixel value of the pixel point of the vehicle-mounted video in the B channel corresponding to the pixel point in the edge image is 22, the data corresponding to the pixel point of the six-channel after splicing is [25, 17, 24, 20, 15, 22].

According to the vehicle-mounted video stabilization method, the edge information of the vehicle-mounted video can be obtained by using the first edge detection algorithm, and the accuracy of determination of whether the vehicle-mounted video is the video with unstable images is improved accordingly.

The inventor further found that qualities of images in the vehicle-mounted video captured under the condition of weak light are poor, and a poor image stabilization effect on the vehicle-mounted video is caused subsequently. Aiming at this problem, denoising processing can be performed on the vehicle-mounted video based on a trained denoised network model to obtain a denoised vehicle-mounted video. The qualities of the images are improved, and the image stabilization processing effect on the vehicle-mounted video is further improved.

In one possible implementation manner, performing denoising on the vehicle-mounted video based on the trained denoised network model to obtain the denoised vehicle-mounted video may include:

In a step of S801, with regard to each frame of image of the vehicle-mounted video, an average luminance value corresponding to the frame of image is obtained based on a luminance value of each pixel in the frame of image.

Specifically, with regard to each frame of image of the vehicle-mounted video, a corresponding average luminance value is calculated by using a following formula (3), which is expressed as:

$$\mathrm{Lum_{ave}} = \exp\left(\frac{1}{N}\sum_{x,y}\ln\big(\delta + \mathrm{Lum}(x,y)\big)\right) \qquad (3)$$

In the third formula, (x, y) represents a position coordinate of a pixel point in the frame image, Lum(x, y) represents a luminance value of the pixel point in the frame image, N represents a total number of pixel points of the frame image, and $\delta$ represents a preset parameter value.

In a step of S802, denoising processing is performed on each frame of image having an average luminance value less than a first preset threshold in the vehicle-mounted video based on the trained denoised network model to obtain the denoised vehicle-mounted video.

Herein, if the average luminance value is less than the first preset threshold, it indicates that a light condition corresponding to the frame image is bad, this frame image is a noisy video image, and the denoising processing needs to be performed on the frame image. That is, an operation of inputting this frame of image into the trained denoised network model to be denoised and outputting a denoised image is performed. The denoised image is a clear image after denoising process. Thus, the qualities of images in the driving process are improved.

Regarding the training process of the denoised network model, this training process specifically includes a step S901 and a step S902.

In the step of S901, a training data set is obtained. The training data set includes a plurality of data pairs, each data pair includes N first video images and N second video images, the in-vehicle luminance value corresponding to the first video is less than the in-vehicle luminance value corresponding to the second video image. The first video and the second video correspond to different photographing objects in the same vehicle respectively, and N is a positive integer.

Herein, the training data set may be obtained by a collection device. For example, the acquisition device may include a DMS camera and an occupancy monitoring system (Occupancy Monitoring System, OMS) camera, both the DMS camera and the OMS camera are configured to collect an in-vehicle video image.

In one possible implementation manner, an implementation process of the step S901 may include a step S9011, a step S9012 and a step S9013.

In the step of S9011, the in-vehicle video is acquired when a first condition is met, the in-vehicle video is taken as the first video when the first condition is met. The first condition is that the luminance value is less than the second preset threshold.

Here, the first condition is that the luminance value is less than the second preset threshold, which indicates that the light condition corresponding to in-vehicle photographing environment is bad. For example, the vehicle is driving at night, in a tunnel, or in an underground garage. The first video is a noisy image.

In the step of S9012, the in-vehicle video is acquired when the second condition is met, and the in-vehicle video is taken as the second video when the second condition is met. The second condition is that the luminance value is greater than or equal to the second preset threshold.

Herein, the second condition is that the luminance value is greater than or equal to the second preset threshold value, which indicates that the light condition corresponding to the in-vehicle photographing environment is relatively good. For example, the vehicle is driving in the daytime. The second video is a noise-free image.

In the step of S9013, the training data set is established based on the first video and the second video image.

It should be noted that each first video acquired by a camera corresponds to a second video image. That is, the first video and the second video correspond to different photographing objects in the same vehicle, respectively.

That is, the image acquisition environment of the first video and the image acquisition environment of the second video corresponding to the first video are associated, but are not paired. That is, the photographed contents corresponding to the two video images does not need to be completely consistent.

It is clear from the above descriptions that the training data set is a non-paired data set, and the non-paired data set has a low acquisition difficulty and is prone to be obtained. Thus, a training difficulty of the denoised network model is reduced to a certain extent.

This step may specifically include: dividing the acquired first video and the acquired second video into a plurality of data pairs, where each data pair includes N first video images and N second video images. It should be noted that each first video in the N first video images corresponds to one second video in the data pair. Different first video images may be video images in the same vehicle or be video images in different vehicles.

Here, in order to enrich the diversity of collected data, the camera may have a plurality of placement positions, such as a column A, a center console, a steering pipe, a rearview mirror, or the like. In addition, the persons who are photographed in the vehicle, such as in-vehicle drivers and passengers, also need to be diversified in age and gender.

In the step of S902, an iterative training is performed on the denoised network model to be trained based on the training data set to obtain a trained denoised network model.

The denoised network model to be trained may be a generative adversarial network (Generative Adversarial Network, GAN) model. The GAN model includes a generative network and a discriminative network.

A general process of performing the iteratively training on the denoised network model to be trained based on the training data set is described below: adversarial training is performed on the untrained generative network and the untrained discriminative network, and the first video in the data pair is input into the generative network to generate a random video to cheat the discriminative network; then, the discriminative network determines the authenticity of the random video image; finally, in the training process of the two types of networks, the capability of the two types of networks becomes stronger and stronger, and finally reaches a steady state, and the steady state generative network is determined as the trained denoised network model. Regarding the detail of the specific process, reference can be made to the following steps S9021-S9026.

In the step of S9021, the first video in the data pair is input into the denoised network model to obtain a third video image.

The step S9021 may specifically include: extracting a Y component of a YUV spatial image corresponding to the first video in the data pair, and inputting the Y component corresponding to the first video into the denoised network model to obtain the third video image. It should be noted that the main structure information of the image is on the Y component, the Y component corresponding to the image is utilized to perform model training. In one aspect, a calculation amount can be reduced, in another aspect, the robustness of the denoised network model can be improved, and thus the denoised network model is not affected by a color space of the image.

It should be noted that the first video is a noisy image. When training is started, the network parameters of the generative network are random network parameters, and the N third video images which are obtained by inputting the N first video images in the data pair into the generative network are N random video images.

The denoised network model may be a generative network. The network structure of the generative network adopts a U-Net network structure. This structure includes M convolution modules, each convolution module includes a convolutional layer, an activation function, and a normalization layer, where a plurality of convolutional layers are provided. Each convolution module is a residual structure which is divided into a down-sampling phase and an up-sampling phase. Bilinear up-sampling is used in combination with the convolutional layer to replace the traditional deconvolution operation in the up-sampling phase.

For example, the U-net network structure may include 8 convolution modules, and each convolution module includes two $3 \times 3$ convolutional layers, a leakyReLu activation function, and a normalization layer.

In the step of S9022, the third video is input into a global discriminative network to obtain a first discrimination result.

In this step, the third video is input into the global discriminative network to determine the authenticity of the third video image, and an output discrimination result is generally represented by 0 or 1. In the output discrimination result, 0 indicates that the discrimination result is false, and 1 indicates that the discrimination result is true.

In the step of S9023, the second video in the data pair is input into the global discriminative network to obtain a second discrimination result.

The step S9023 may specifically include: extracting a Y component of a YUV spatial image corresponding to a second video in the data pair; and inputting the Y component corresponding to the second video into the global discriminative network to obtain the second discrimination result. Herein, the second video (i.e., the real noise-free image) is input into the global discriminative network in order to determine the authenticity of the second video image.

In the step of S9024, a local image of the third video is input into a local discriminative network to obtain a third discrimination result.

Herein, each third video is divided into a plurality of local images which are input into the local discriminative networks to determine the authenticities of the local images in the third video image, thereby guiding the subsequent training of the generative network more finely.

It should be noted that, the discriminative network is specifically referred to as the global discriminative network and the local discriminative network. With regard to the second video in the data pair, that is, the real noise-free image, the discriminative network needs to determine the correct output value 1 as much as possible. However, with regard to the third video image, that is, the third video (the false denoised image) obtained by inputting the first video (the noisy image) in the data pair into the generative network, the discriminative network needs to determine the error output value 0 as much as possible, however, the generative network deceives the discriminative network as much as possible. The two types of networks are mutually adversarial and the parameters are adjusted continuously, with the ultimate purpose of making the discriminative network (i.e., the global discriminative network and the local discriminative network) to be unable to determine whether the output result of the generative network is true.

The two types of networks are mutually adversarial and the parameters are adjusted continuously specifically refers to continuous adjustment of the network parameters of the global discriminative network, the local discriminative network and the generative network.

Firstly, the network parameters of the fixed generative network are invariable, the network parameters of the global discriminative network and the network parameters of the local discriminative network are updated multiple times, the global discriminative network and the local discriminative network have better discrimination capability. Then, the network parameters of the global discriminative network and the network parameters of the local discriminative network are fixed, and the network parameters of the generative network are updated for multiple times.

The respective network parameters of the global discriminative network and the local discriminative network have been updated multiple times by traversing some data pairs in the training data set. This specifically describes a process of keeping the network parameters of the global discriminative network and the network parameters of the local discriminative network unchanged, and updating the network parameters of the network multiple times based on some unused data.

Below, taking the global discriminative network as an example, an update process of the network parameters of the global discriminative network is described before.

At step a1, N first video images in the first data pair are input into the generative network G to obtain N random video images $x_f$.

At step a2, N random video images $x_f$ are input into the global discriminative network D1 to obtain N discrimination results $D_1(x_f)$.

At step a3, N second video images $x_r$ in the first data pair are input into the global discriminative network D1 to obtain N discrimination results $D_1(x_r)$.

At step a4, a loss value $L_G^{Glolal}$ of the global discriminative network D1 is calculated according to the N discrimination results $D_1(x_f)$ and the N discrimination results $D_1(x_r)$. Specifically, the loss value $L_G^{Glolal}$ of the global discriminative network D1 is calculated by using the formula (2), the formula (3) and the formula (4), which are listed below:

$$L_D^{Glolal} = E_{x_r \sim P_{real}}\left[(D_c(x_r, x_f) - 1)^2\right] + E_{x_f \sim P_{fake}}\left[D_c(x_f, x_r)^2\right] \qquad (4)$$

$$D_c(x_r, x_f) = \sigma(D_1(x_r)) - E_{x_f \sim P_{fake}}[D_1(x_f)] \qquad (5)$$

$$D_c(x_f, x_r) = \sigma\left(D_1(x_f)\right) - E_{x_r \sim P_{real}}[D_1(x_r)] \qquad (6)$$

$D_c(x_r, x_f)$ is used to indicate a discrimination capability of the global discriminator on the second video image, the greater the value of $D_c(x_r, x_f)$, the higher the probability that the second video is determined as a true image; $D_c(x_f, x_r)$ is used to represent the discrimination capability of the global discriminator on the random video image, the greater the value of $D_c(x_f, x_r)$, the higher the probability that the random video is determined as the true image.

$E_{x_f \sim P_{fake}}[D_1(x_f)]$ represents an expected value of N discrimination results $D_1(x_f)$, $\sigma(D_1(x_r))$ represents activation function values of N discrimination results $D_1(x_r)$, $E_{x_r \sim P_{real}}[D1(x_r)]$ represents expected values of the N discrimination results $D_1(x_r)$, $\sigma(D_1(x_f))$ represents the activation function value of the N discrimination results $D_1(x_f)$.

At step a5, the network parameters of the global discriminative network D1 are updated based on the loss value $L_D^{Glolal}$ of the global discriminative network D1 to obtain the global discriminative network D1 after parameter updating.

The above process is a updating process of the network parameters of the global discriminative network D1. Then, the first data pair in the step a1 is replaced with the second data pair, and these steps are repeatedly performed to update the network parameters of the global discriminative network D1 again after the parameter updating, until the first preset number of times of updating of network parameters has been completed.

It should be noted that the network parameter updating process of the local discriminative network D2 is substantially the same as the network parameter updating process of the global discriminative network, the difference lies in that the data pairs adopted for parameter updating are different, it is the local image of the video which is input to the local discriminative network D2, and the loss functions used for calculating the loss value of the local discriminative network D2 are different. Specifically, the loss function used for calculating the loss value of the local discriminative network D2 is the following formula (7), which is expressed as:

$$L_D^{local} = E_{x_r \sim P_{real}}[(D_2(x_r) - 1)^2] + E_{x_f \sim P_{fake}}\left[D_2(x_f)^2\right] \qquad (7)$$

In this formula, $D_2(x_r)$ represents a discrimination result obtained after inputting the local image of the second video in the data pair into the local discriminative network D2, $D_2(x_f)$ represents a discrimination result obtained after inputting the local image of the random video into the local discriminative network D2, the random video is a video obtained after inputting the first video in the data pair into the generative network.

In a step of S9025, a target loss value of the denoised network model is calculated according to the first discrimination result, the second discrimination result, and the third discrimination result.

Herein, the training of the denoised network model (i.e., the generative network) is guided through the discrimination results of the two discriminative networks (i.e., the global discriminative network D1 and the local discriminative network D2). Regarding the specific implementation process, reference can be made to above.

In a step of S9026, the network parameters of the denoised network model are updated according to a target loss value to obtain the trained denoised network model.

The step S9026 may specifically include: determining whether the updated denoised network model meets a preset condition after updating the network parameters of the denoised network model according to the target loss value, determining, if the updated denoised network model meets the preset condition, the updated denoised network model as the trained denoised network model; otherwise, updating the updated denoised network model again until the updated denoised network model meets the preset condition.

The step of updating the updated denoised network model again specifically includes: returning to step S9021 and subsequent steps, after the updated denoised network model is updated to the denoised network model. **In** this condition, the data pair in the step S9021 is replaced with the next data pair in the training data set.

The preset condition is that the target loss value of the currently updated denoised network model is equal to the target loss value of the denoised network model updated previously. As an alternative, the preset condition is that the number of times of updating of the network parameter corresponding to the denoised network model reaches a second preset number of times.

In an example, if the target loss value of the currently updated denoised network model is not equal to the target loss value of the denoised network model updated previously, and the number of times of updating the network parameter of the current denoised network model does not reach a third preset number of times, then, the updated denoised network model is updated to the denoised network model, the step S9021 and the subsequent steps are returned to be executed until the target loss value of the currently updated denoised network model and the target loss value of the denoised network model updated previously, or the number of times of updating of the network parameters of the current denoised network model reaches the third preset number of times.

Herein, completion of a round of updating of network parameters includes updating network parameters of the global discriminative network for multiple times, updating the network parameters of the local discriminative network for multiple times, and updating the network parameters of the denoised network model for multiple times.

The number of times of updating of the network parameters of the two discriminative networks is greater than the number of times of updating of the network parameters of the denoised network model. The data pairs used when the network parameters of different networks are updated are different. It should be noted that, in the process of updating of the network parameters of one network, the network parameters of the other two networks are invariable.

When the number of times of updating of network parameters of the current denoised network model reaches the third preset number of times, the target loss value of the currently updated denoised network model is not equal to the target loss value of the denoised network model updated previously, then, the next round of updating process of network parameters is executed until the target loss value of the currently updated denoised network model is equal to the target loss value of the denoised network model updated previously. It should be noted that, in this condition, the loss value of the global discriminative network and the loss value of the local discriminative network are not decreased.

In one possible implementation manner, the implementation process of the step S9025 may specifically include step b1, step b2, step b3 and step b4.

In the step of b1, the first loss value is calculated. The first loss value represents a feature distance between the first video and the fifth video image.

It should be noted that, since the data pair in the training data is unpaired, there does not exist a real image (i.e., the second video image) truly corresponding to the first video image. In order to ensure the consistency of the content of the video before output by the generative network and the content of the video after output by the generative network, a perceptual loss function is used to calculate the first loss value for representing the feature distance between the first video and the third video image. The specific implementation process includes steps b11, b12 and b13.

In the step of b11, an image feature of the first video and an image feature of the fifth video are extracted, respectively.

Specifically, a pre-trained feature extraction model are used to extract the image feature of the first video and the image feature of the fifth video image, respectively. A feature extraction model may be a VGG-16 model.

In a step of b12, the feature distance between the first video and the third video are calculated according to the image feature of the first video and the image feature of the third video image.

Specifically, the feature distance between the first video and the third video is calculated by using a following formula (8) which is expressed as:

$$L_p = \frac{1}{w_{i,j}H_{i,j}}\sum_{x=1}^{w_{i,j}}\sum_{y=1}^{H_{i,j}}(\varphi_{i,j}(I) - \varphi_{i,j}(G(I)))^2 \qquad (8)$$

In this formula, $\varphi_{i,j}(I)$ represents an image feature of the first video extracted by the j-th convolutional layer after the i-th maximum pooling layer of the feature extraction model, I represents the first video image, $\varphi_{i,j}(G(I))$ represents the image feature of the third video extracted by the j-th convolutional layer after the i-th maximum pooling layer of the feature extraction model, G(I) represents the third video obtained by inputting the first video into the generative network, y represents a height of the image which has a value range from 1 to $H_{i,j}$, x represents a width of the image which has a value range from 1 to $w_{i,j}$, $w_{i,j}H_{i,j}$ is used to represent an area of the image, and $L_p$ represents the first loss value, that is, the feature distance between the first video and the third video image.

In the step of b13, the feature distance between the first video and the third video is determined as the first loss value.

In the step of b2, the second loss value is calculated according to the first discrimination result and the second discrimination result.

In one possible implementation manner, the implementation process of the step b2 may include a step b21, a step b22 and a step b23.

In the step of b21, a first expected value of the first discrimination result and a second expected value of the second discrimination result are calculated, respectively.

In the step of b22, a first function value of the first discrimination result and a second function value of the second discrimination result are respectively calculated based on a preset activation function.

In the step of b23, the second loss value is calculated according to the first expected value, the second expected value, the first function value, and the second function value.

It should be noted that the above steps b21-b23 may be represented by a formula (9), that is, the second loss value is calculated by using the following formula (9), which is expressed as:

$$L_G^{Global} = E_{x_f \sim P_{fake}}\left[(D_c(x_f, x_r) - 1)^2\right] + E_{x_r \sim P_{real}}\left[D_c(x_r, x_f)^2\right] \qquad (9)$$

Here, $D_c(x_f, x_r)$ may be represented by the above formula (4), and $D_c(x_r, x_f)$ may be represented by the aforementioned formula (5) and the aforementioned formula (6), which are expressed as:

$$D_c(x_r, x_f) = \sigma(D_1(x_r)) - E_{x_f \sim P_{fake}}\left[D_1(x_f)\right] \qquad (5)$$

$$D_c(x_f, x_r) = \sigma\left(D_1(x_f)\right) - E_{x_r \sim P_{real}}[D_1(x_r)] \qquad (6)$$

In this condition, $D_1(x_f)$ represents the first discrimination result, $D_1(x_r)$ represents the second discrimination result, and $L_G^{Global}$ represents the second loss value.

In the step of b3, a third loss value is calculated according to the third discrimination result.

Specifically, the third loss value is calculated by using the following formula (10), which is expressed as:

$$L_G^{local} = E_{x_r \sim P_{fake}}\left[(D_2(x_f) - 1)^2\right] \qquad (10)$$

In this formula, $D_2(x_f)$ represents the third discrimination result, and $L_G^{local}$ represents the third loss value.

In the step of b4, the first loss value, the second loss value, and the third loss value are summated to obtain the target loss value of the denoised network model

Herein, the target loss value is expressed as $L_g = L_p + L_G^{Global} + L_G^{local}$.

It should be understood that, the values of serial numbers of the steps in the aforesaid do not indicate an order of execution sequences of the steps. Instead, the execution sequences of the steps should be determined by functionalities and internal logic of the steps, and thus shouldn't be regarded as limitation to implementation processes.

Corresponding to the aforementioned method, FIG. 4 illustrates a structural block diagram of a vehicle-mounted video stabilization apparatus.

Referring to FIG. 4, the vehicle-mounted video stabilization apparatus 400 may include a first obtaining module 410, a network processing module 420, a smoothing processing module 430, a calculation module 440, and a motion compensation module 450.

The obtaining module 410 is configured to obtain a vehicle-mounted video of a vehicle.

The network processing module 420 is configured to input the vehicle-mounted video into a first neural network to obtain a plurality of grid-shaped first motion vector graphs. The first motion vector graph is used for representing a corresponding offset vector of each grid of a next frame of image of every two adjacent frames of images with respect to each grid of a previous frame of image of the two adjacent frames in the vehicle-mounted video.

The smoothing processing module 440 is configured to perform a smoothing processing on the first motion vector graph to obtain a processed second motion vector graph.

The calculation module 440 is configured to calculate a first motion optical flow graph according to the second motion vector graph. The first motion optical flow graph is used to represent a corresponding motion displacement of each pixel point of the next frame of image of the every two adjacent frames of images in the vehicle-mounted video with respect to each pixel point of the previous frame of image.

The motion compensation module 450 is configured to perform a motion compensation on a frame image in the vehicle-mounted video according to the first motion optical flow graph to obtain a video having stabilized images.

In one possible implementation manner, the smoothing processing module 430 may be specifically configured to:

obtain, with regard to each frame of image of the vehicle-mounted video, the first motion vector graphs respectively corresponding to previous and subsequent K frames of images of the current frame of image, where K is a positive integer; and

perform a weighted fusion calculation on the first motion vector graphs respectively corresponding to the previous and subsequent K frames of images of the current frame image to obtain the second motion vector graph.

**In** one possible implementation manner, the vehicle-mounted video stabilization apparatus 400 further includes a speed obtaining module and a matching module.

The speed obtaining module is configured to obtain a target moving speed. The target moving speed is a moving speed of a photographing device for photographing the vehicle-mounted video when the photographing device photographs the vehicle-mounted video.

The matching module is configured to search a plurality of neural networks for matching the target moving speed from a neural network, and use the neural network matching the target moving speed as a first neural network.

**In** one possible implementation manner, the camera device is a camera mounted on a vehicle, and the speed obtaining module is specifically configured to: obtain a driving speed of the vehicle and determine the driving speed as the target moving speed, when the camera device captures the vehicle-mounted video.

**In** one possible implementation manner, the vehicle-mounted video stabilization apparatus 400 further includes a preprocessing module configured to input the vehicle-mounted video into a trained unstable-image-video-classification-model to be processed so as to obtain a probability value that the vehicle-mounted video is a video with unstable images; and turn to the network processing module 420 when the probability value is greater than a preset threshold.

In one possible implementation manner, the vehicle-mounted video stabilization apparatus 400 further includes a denoising module, a first training module, and a second training module.

The denoising module is configured to perform a denoising processing on the vehicle-mounted video based on a trained denoised network model to obtain a denoised vehicle-mounted video.

The first training module is configured to obtain a training data set, where the training data set includes a plurality of data pairs, each of the data pairs includes N first video images and N second video images, a luminance value corresponding to the first video is less than a luminance value corresponding to the second video image, wherein the first video and the second video correspond to different photographing objects respectively, N is a positive integer.

The second training module is configured to perform an iterative training on a denoised network model to be trained based on the training data set to obtain the trained denoised network model.

In one possible implementation manner, the second training module is specifically configured to: input the first video in the data pair into the denoised network model to obtain a third video image, input the third video into a global discriminative network to obtain a first discrimination result, input the second video in the data pair into the global discriminative network to obtain a second discrimination result, input a local image of the third video into a local discriminative network to obtain a third discrimination result, calculate a target loss value of the denoised network model according to the first discrimination result, the second discrimination result and the third discrimination result, and update a network parameter of the denoised network model according to the target loss value to obtain the trained denoised network model.

In one possible implementation manner, the denoising module is specifically configured to: calculate an average luminance value corresponding to the frame of image based on a luminance value of each pixel in the frame of image, for each frame of image of the vehicle-mounted video; and perform a denoising processing on each frame of image having an average luminance value less than a first preset threshold in the vehicle-mounted video based on the trained denoised network model to obtain the de-noised vehicle-mounted video.

In one possible implementation manner, the calculation module 440 includes:

a first calculation unit configured to perform a linear transformation on the second motion vector graph to obtain a homography matrix of each grid in the second motion vector graph; and

a second calculation unit configured to calculate the first motion optical flow graph according to the homography matrix of each grid in the second motion vector graph.

In one possible implementation manner, the second calculation unit may be configured to: obtain, for each grid in the second motion vector graph, homogeneous coordinates corresponding to a plurality of pixel points contained in the grid projected onto the image; and calculate the first motion optical flow graph according to the homography matrix of the grid and the homogeneous coordinates corresponding to the plurality of pixel points contained in the grid projected onto the image.

In one possible implementation manner, the vehicle-mounted video stabilization apparatus 400 further includes:

a second obtaining module configured to obtain a training data set, where the training data set includes a plurality of data pairs, and each data pair includes a first image and a second image, and the second image has jitter relative to the first image; and

a network training module configured to train an unsupervised neural network based on the training data set to obtain the trained first neural network.

In one possible implementation manner, the network training module may be specifically configured to:

input the first image and the second image in the data pair into the unsupervised neural network to obtain a grid-shaped third motion vector graph, where the third motion vector graph is used to represent a corresponding offset vector of each grid of the second image with respect to each grid of the first image;

calculate a second motion optical flow graph according to the third motion vector graph, where the second motion optical flow graph is used to represent a corresponding motion displacement of each pixel point of the second image relative to each pixel point of the first image;

perform a bilinear interpolation operation on the second image according to the second motion optical flow graph to obtain a third image after the second image is moved;

calculate a loss value between the first image and the third image; and

update a network parameter of the unsupervised network based on the loss value to obtain the first neural network.

It needs to be noted that, since contents including information interaction and the execution process between the various modules, and the method of the present invention are based on the same concept, regarding the specific functions and the technical effects achieved by the functions, reference can be made to the method. The contents including information interaction and the execution process between the various modules are not repeatedly described herein.

The person of ordinary skill in the art may clearly understand that, for the convenience of illustration and for conciseness, the dividing of the aforesaid various functional modules is merely described as examples. In an actual application, the aforesaid functions may be assigned to functional modules to be accomplished, that is, an inner structure of the device is divided into different functional modules for accomplishing the whole or a part of functionalities described above. The various functional modules may be integrated into a processing unit, or each of the units exists independently and physically. As an alternative, two or more than two of the units are integrated into a single unit. The aforesaid integrated units may either by actualized in the form of hardware or in the form of software functional units. In addition, the specific names of the various functional modules are only used to be distinguished from each other conveniently. Regarding the specific operating processes of the modules in the system, reference may be made to the corresponding process in the aforesaid method. This specific operating processes of the modules in the system are not repeatedly described herein.

A vehicle is further provided by the present invention. Referring to FIG. 5, the vehicle includes a terminal device 500, and the terminal device 500 may include: at least one processor 510, a memory 520, and a computer program stored in the memory 520 and executable by the at least one processor 510. The processor 510 is configured to, when executing the computer program, implements the steps in any one of the various methods, such as the steps S201-S205 shown in FIG. 1. Alternatively, the processor 510 is configured to, when executing the computer program, implement the functions of the various modules/units in the apparatus described above, such as the functions of the modules 410-450 shown in FIG. 4.

Exemplarily, the computer program may be divided into one or a plurality of modules/units, the one or plurality of modules/units are stored in the memory 520 and are executed by the processor 510 so as to implement the present invention. The one or plurality of modules/units may be a series of computer program segments that can accomplish particular functionalities, these program segments are used for describing an executive process of the computer program in the terminal device 500.

A person of ordinary skill in the art can understand that, FIG. 5 is only one example of the terminal device, but should not be constituted as limitation to the terminal device. More or less components than the components shown in FIG. 5 may be included. As an alternative, some components or different components, such as an input and output device, a network access device and the like, may be combined.

The processor 510 may be central processing unit (Central Processing Unit, CPU), and may also be other general purpose processor, digital signal processor (Digital Signal Processor, DSP), application specific integrated circuit (Application Specific Integrated Circuit, ASIC), field-programmable gate array (Field-Programmable Gate Array, FGPA), or some other programmable logic devices, discrete gate or transistor logic device, discrete hardware component, etc. The general purpose processor may be a microprocessor, as an alternative, the processor can also be any conventional processor, or the like.

The memory 520 may be an internal storage unit of the terminal device, such as a hard disk or a memory of the terminal device. The memory 520 may also be an external storage device of the terminal device, such as a plug-in hard disk, a smart media card (Smart Media Card, SMC), a secure digital (Secure Digital, SD) card, a flash card (Flash Card, FC) equipped on the terminal device. The memory 520 may also be configured to store the computer program, and other procedures and data as required by the terminal device. The memory 520 may also be configured to store data that has been output or being ready to be output temporarily.

A bus can be an industry standard architecture (Industry Standard Architecture, ISA) bus, a peripheral component interconnect (Peripheral Component, PCI) bus, or an extended industry standard architecture (Extended Industry Standard Architecture, EISA) bus. The buses can be divided into address buses, data buses, control buses, etc. For the convenience of representation, the bus shown in the accompanying drawings is not limited to only one bus or one type of bus.

The vehicle-mounted video stabilization method provided by the present invention can be applied to terminal devices such as computers, tablets, laptops, netbooks, and personal digital assistants (personal digital assistants, PDAs). The specific types of the terminal devices are not limited.

When the integrated unit is achieved in the form of software functional units, and is sold or used as an independent product, the integrated unit may be stored in a computer readable storage medium. Based on this understanding, a whole or part of flow process for implementing the method can also be accomplished in the manner of using computer program to instruct relevant hardware. When the computer program is executed by the processor, the steps in the various methods described above may be implemented.

Similarly, as a computer program product, when the computer program product is executed the terminal device, the terminal device is caused to implement the steps in the various methods.

The computer program includes computer program codes which may be in the form of source code, object code, executable documents or some intermediate form, etc. The computer readable medium can include: any physical equipment or device that can carry the computer program codes, recording medium, USB flash disk, mobile hard disk, hard disk, optical disk, computer memory, ROM (Read-Only Memory), RAM (Random Access Memory), electrical carrier signal, telecommunication signal and software distribution medium, etc. It needs to be explained that, the contents contained in the computer readable medium may be added or reduced appropriately according to the requirement of legislation and patent practice in a judicial district, for example, in some judicial districts, according to legislation and patent practice, the computer readable medium doesn't include electrical carrier signal and telecommunication signal.

**Claims**

1. A vehicle-mounted video stabilization method, wherein, the method comprises steps of:

   (S601) obtaining moving speed of a photographing device for photographing the vehicle-mounted video when the photographing device photographs the vehicle-mounted video; and
   (S602) searching a plurality of neural networks for matching the target moving speed from a neural network, and using the neural network matching the target moving speed as a first neural network;
   (S201) obtaining a vehicle-mounted video of a vehicle;
   (S202) inputting the vehicle-mounted video into the first neural network to obtain a plurality of grid-shaped first motion vector graphs, wherein each of the first motion vector graphs is used to represent a corresponding offset vector of each grid of a respective next frame of image of every two adjacent frames of images with respect to each grid of a respective previous frame of image of the two adjacent frames in the vehicle-mounted video, wherein each first grid-shaped motion vector graph is constructed between respective two adjacent frames as having a total number of $S\times S$ grids, where one S represents the number of rows of the grid graph, the other S represents the number of columns of the grid graph, each grid regresses four motion vectors $\Delta i, j$, where $i \in [0,S)$, $j \in [0,S)$, i represents the row number of the grid graph, j represents the column number of the grid graph, finally, resulting in a three-dimensional motion matrix of $S\times S\times 3$, where each dimension in the three-dimensional motion matrix of $S\times S\times 3$ represents motion offsets in x direction, y direction and z direction;
   (S203) performing a smoothing processing on the first motion vector graph to obtain a processed second motion vector graph, wherein the smoothing processing comprises:

- (S2031) obtaining, with regard to each frame of image of the vehicle-mounted video, the first motion vector graphs respectively corresponding to previous and subsequent K frames of images of the current frame of image, wherein K is a positive integer; and
- (S2032) performing a weighted fusion calculation on the first motion vector graphs respectively corresponding to the previous and subsequent K frames of images of the current frame image to obtain the second motion vector graph;

(S204) obtaining a first motion optical flow graph by calculation according to the second motion vector graph, wherein the first motion optical flow graph is used to represent a corresponding motion displacement of each pixel point of the next frame of image of the every two adjacent frames of images in the vehicle-mounted video with respect to each pixel point of the previous frame of image, wherein the step of calculating a first motion optical flow graph according to the second motion vector graph comprises:

- (S2041) performing a linear transformation on the second motion vector graph to obtain a homography matrix of each grid in the second motion vector graph; and
- (S2042) calculating the first motion optical flow graph according to the homography matrix of each grid in the second motion vector graph, wherein the step of calculating the first motion optical flow graph according to the homography matrix of each grid in the second motion vector graph comprises:

-- obtaining, for each grid in the second motion vector graph, homogeneous coordinates corresponding to a plurality of pixel points contained in the grid projected onto the image; and
-- calculating the first motion optical flow graph according to the homography matrix of the grid and the homogeneous coordinates corresponding to the plurality of pixel points contained in the grid projected onto the image; and

(S205) performing a motion compensation on a frame image in the vehicle-mounted video according to the first motion optical flow graph to obtain a video having stabilized images.

2. The vehicle-mounted video stabilization method according to claim 1, wherein the photographing device is a camera mounted on a vehicle, and the step of (S601) obtaining the target movement speed comprises:
obtaining a driving speed of the vehicle and determining the driving speed as the target moving speed, when the camera device captures the vehicle-mounted video.

3. The vehicle-mounted video stabilization method according to claim 1, wherein before (S202) inputting the vehicle-mounted video into the first neural network, the method further comprises:

inputting the vehicle-mounted video into a trained unstable-image-video-classification-model to be processed to obtain a probability value of the vehicle-mounted video being a video with unstable images; and
performing the step of inputting the vehicle-mounted video into the first neural network and subsequent steps, if the probability value is greater than a preset threshold.

4. The vehicle-mounted video stabilization method according to claim 1, wherein before (S202) inputting the vehicle-mounted video into the first neural network, the method further comprises:

performing a denoising processing on the vehicle-mounted video based on a trained denoised network model to obtain a denoised vehicle-mounted video;
wherein a training process of the denoised network model comprises:

(S901) obtaining a training data set, wherein the training data set comprises a plurality of data pairs, each of the data pairs comprises N first video images and N second video images, a luminance value corresponding to the first video is less than a luminance value corresponding to the second video image, wherein the first video and the second video correspond to different photographing objects respectively, N is a positive integer; and
(S902) performing an iterative training on a denoised network model to be trained based on the training data set to obtain the trained denoised network model.

5. The vehicle-mounted video stabilization method according to claim 4, wherein the step of performing the iterative training on the denoised network model to be trained based on the training data set to obtain the trained denoised network model comprises:

(S9021) inputting the first video in the data pair into the denoised network model to obtain a third video image;
(S9022) inputting the third video into a global discriminative network to obtain a first discrimination result;
(S9023) inputting the second video in the data pair into the global discriminative network to obtain a second discrimination result;
(S9024) inputting a local image of the third video into a local discriminative network to obtain a third discrimination result;
(S9025) calculating a target loss value of the denoised network model according to the first discrimination result, the second discrimination result and the third discrimination result; and
(S9026) updating a network parameter of the denoised network model according to the target loss value to obtain the trained denoised network model.

6. The vehicle-mounted video stabilization method according to claim 4, wherein the step of performing denoising processing on the vehicle-mounted video based on the trained denoised network model comprises:

(S801) calculating an average luminance value corresponding to the frame of image based on a luminance value of each pixel in the frame of image, for each frame of image of the vehicle-mounted video; and
(S802) performing a denoising processing on each frame of image having an average luminance value less than a first preset threshold in the vehicle-mounted video based on the trained denoised network model to obtain the denoised vehicle-mounted video.

7. The vehicle-mounted video stabilization method according to claim 1, wherein before the step of (S201) obtaining the vehicle-mounted video of the vehicle, the vehicle-mounted video stabilization method further comprises:

(S101) obtaining a training data set, wherein the training data set comprises a plurality of data pairs, each data pair comprises a first image and a second image, and the second image has jitter relative to the first image; and
(S102) training an unsupervised neural network based on the training data set to obtain the trained first neural network.

8. The vehicle-mounted video stabilization method according to claim 7, wherein the step of (S102) training the unsupervised neural network based on the training data set to obtain the trained first neural network comprises:

(S1021) inputting the first image and the second image in the data pair into the unsupervised neural network to obtain a grid-shaped third motion vector graph, wherein the third motion vector graph is used to represent an offset vector of each grid of the second image with respect to each grid of the first image;
(S1022) calculating a second motion optical flow graph according to the third motion vector graph, wherein the second motion optical flow graph is used to represent a corresponding motion displacement of each pixel point of the second image with respect to each pixel point of the first image;
(S1023) performing a bilinear interpolation operation on the second image according to the second motion optical flow diagram to obtain a third image after the second image is moved;
(S1024) calculating a loss value between the first image and the third image; and
(S1025) updating a network parameter of the unsupervised network based on the loss value to obtain the first neural network.

9. A vehicle, comprising a terminal device (500), the terminal device (500) comprising a memory (520), a processor (510), and a computer program stored in the memory (520) and executable by the processor (510), wherein, when the processor (510) executing the computer program, the processor is caused to carry out the vehicle-mounted video stabilization method according to any one of claims 1 to 8.

10. A computer-readable storage medium comprising a computer program, wherein, when the computer program is executed by a processor, the processor is caused to carry out the vehicle-mounted video stabilization method according to any one of claims 1 to 8.

**Patentansprüche**

1. Fahrzeugseitiges Videostabilisierungsverfahren, wobei das Verfahren die Schritte aufweist:

(S601) Erfassen der Bewegungsgeschwindigkeit einer Aufnahmeeinrichtung zum Aufnehmen des fahrzeugmontierten Videos, während die Aufnahmeeinrichtung das fahrzeugseitigen Videos aufnimmt; und

(S602) Durchsuchen einer Vielzahl neuronaler Netzwerke nach einem neuronalen Netzwerk, das mit der Ziel-Bewegungsgeschwindigkeit übereinstimmt, und Verwenden des neuronalen Netzwerks, das mit der Ziel-Bewegungsgeschwindigkeit übereinstimmt, als erstes neuronales Netzwerk;

(S201) Erfassen eines fahrzeugseitigen Videos eines Fahrzeugs;

(S202) Einspeisen des fahrzeugseitigen Videos in das erste neuronale Netzwerk zum Erhalten einer Vielzahl gitterförmiger erster Bewegungsvektordiagramme, wobei jedes der ersten Bewegungsvektordiagramme verwendet wird, um einen entsprechenden Verschiebungsvektor jedes Gitters eines jeweiligen nächsten Einzelbilds jedes Bildpaarrahmens des fahrzeugseitigen Videos relativ zu jedem Gitter eines jeweiligen vorherigen Einzelbilds des Bildpaarrahmens darzustellen, wobei jedes erste gitterförmige Bewegungsvektordiagramm zwischen jeweiligen zwei benachbarten Einzelbildern mit insgesamt $S \times S$ Gittern konstruiert wird, wobei ein S die Anzahl der Zeilen des Gitterdiagramms darstellt, das andere S die Anzahl der Spalten des Gitterdiagramms darstellt, jedes Gitter vier Bewegungsvektoren $\Delta i, j$ regressiert, wobei $i \in [0,S)$, $j \in [0,S)$, i die Zeilennummer und j die Spaltennummer des Gitterdiagramms darstellt, was schließlich zu einer dreidimensionalen Bewegungsmatrix von $S \times S \times 3$ führt, wobei jede Dimension der dreidimensionalen Bewegungsmatrix von $S \times S \times 3$ Bewegungsverschiebungen in x-, y- und z-Richtung darstellt;

(S203) Durchführen einer Glättungsverarbeitung an dem ersten Bewegungsvektordiagramm zum Erhalten eines verarbeiteten zweiten Bewegungsvektordiagramms, wobei die Glättungsverarbeitung aufweist:

- (S2031) Erfassen der ersten Bewegungsvektordiagramme, die jeweils den vorhergehenden und nachfolgenden K Einzelbildern des aktuellen Einzelbilds des fahrzeugseitigen Videos entsprechen, wobei K eine positive ganze Zahl ist; und

- (S2032) Durchführen einer gewichteten Fusionsberechnung an den ersten Bewegungsvektordiagrammen, die jeweils den vorhergehenden und nachfolgenden K Einzelbildern des aktuellen Einzelbilds entsprechen, zum Erhalten des zweiten Bewegungsvektordiagramms;

- (S204) Ermitteln eines ersten Bewegungsoptikflussdiagramms durch Berechnung basierend auf dem zweiten Bewegungsvektordiagramm, wobei das erste Bewegungsoptikflussdiagramm verwendet wird, um eine entsprechende Bewegungsverschiebung jedes Pixelpunkts des nächsten Einzelbilds eines jeden Bildpaarrahmens des fahrzeugseitigen Videos relativ zu jedem Pixelpunkt des vorherigen Einzelbilds darzustellen, wobei der Schritt des Ermittelns des ersten Bewegungsoptikflussdiagramms gemäß dem zweiten Bewegungsvektordiagramm aufweist:

- (S2041) Durchführen einer linearen Transformation des zweiten Bewegungsvektordiagramms zum Erhalten einer Homographiematrix jedes Gitters im zweiten Bewegungsvektordiagramm; und

- (S2042) Berechnen des ersten Bewegungsoptikflussdiagramms basierend auf der Homographiematrix jedes Gitters im zweiten Bewegungsvektordiagramm, wobei der Schritt des Berechnens des ersten Bewegungsoptikflussdiagramms aufweist:

-- Erfassen, für jedes Gitter im zweiten Bewegungsvektordiagramm, homogener Koordinaten, die zu einer Vielzahl von in das Bild projizierten Pixelpunkten gehören; und

-- Berechnen des ersten Bewegungsoptikflussdiagramms basierend auf der Homographiematrix des Gitters und den homogenen Koordinaten der in das Bild projizierten Pixelpunkte; und

(S205) Durchführen einer Bewegungskompensation an einem Einzelbild im fahrzeugseitigen Video basierend auf dem ersten Bewegungsoptikflussdiagramm zum Erhalten eines Videos mit stabilisierten Bildern.

**2.** Fahrzeugseitiges Videostabilisierungsverfahren nach Anspruch 1, wobei die Aufnahmeeinrichtung eine auf einem Fahrzeug montierte Kamera ist, und der Schritt (S601) des Erfassens der Zielbewegungsgeschwindigkeit aufweist: Erfassen einer Fahrgeschwindigkeit des Fahrzeugs und Bestimmen der Fahrgeschwindigkeit als Ziel-Bewegungsgeschwindigkeit, wenn die Kameraeinrichtung das fahrzeugseitige Video aufnimmt.

**3.** Fahrzeugseitiges Videostabilisierungsverfahren nach Anspruch 1, wobei vor dem (S202) Einspeisen des fahrzeugseitigen Videos in das erste neuronale Netzwerk, das Verfahren ferner aufweist:

Einspeisen des fahrzeugseitigen Videos in ein trainiertes Klassifizierungsmodell für instabile Bildvideos zur Verarbeitung und Ermitteln eines Wahrscheinlichkeitswerts dafür, dass das fahrzeugseitigen Videos ein Video mit instabilen Bildern ist; und

Durchführen des Einspeisens des Videos in das erste neuronale Netzwerk und der nachfolgenden Schritte, wenn der Wahrscheinlichkeitswert größer als ein voreingestellter Schwellenwert ist.

4. Fahrzeugseitiges Videostabilisierungsverfahren nach Anspruch 1, wobei vor dem Einspeisen des fahrzeugseitigen Videos in das erste neuronale Netzwerk gemäß (S202) das Verfahren ferner aufweist:

Durchführen einer Rauschunterdrückungsverarbeitung des (S201) basierend auf einem trainierten Rauschunterdrückungsnetzwerkmodell zum Erhalten eines entrauschten fahrzeugseitigen Videos;
wobei ein Trainingsprozess des Rauschunterdrückungsnetzwerkmodells aufweist:

(S901) Erfassen eines Trainingsdatensatzes, wobei der Trainingsdatensatz eine Vielzahl von Datenpaaren aufweist, wobei jedes Datenpaar N erste Videoeinzelbilder und N zweite Videoeinzelbilder aufweist, ein Helligkeitswert der ersten Videoeinzelbilder geringer ist als derjenige der zweiten, und die Videos unterschiedliche Aufnahmeobjekte betreffen, wobei N eine positive ganze Zahl ist; und
(S902) Durchführen eines iterativen Trainingsprozesses eines zu trainierenden Rauschunterdrückungsnetzwerkmodells auf Basis des Trainingsdatensatzes zum Erhalten des trainierten Rauschunterdrückungsnetzwerkmodells.

5. Fahrzeugseitiges Videostabilisierungsverfahren nach Anspruch 4, wobei der Schritt des iterativen Trainingsprozesses des Rauschunterdrückungsnetzwerkmodells aufweist:

(S9021) Einspeisen des ersten Videos des Datenpaars in das Rauschunterdrückungsnetzwerkmodell zum Erhalten eines dritten Videoeinzelbilds;
(S9022) Einspeisen des dritten Videos in ein globales Diskriminierungsnetzwerk zum Erhalten eines ersten Diskriminierungsergebnisses;
(S9023) Einspeisen des zweiten Videos des Datenpaars in das globale Diskriminierungsnetzwerk zum Erhalten eines zweiten Diskriminierungsergebnisses;
(S9024) Einspeisen eines lokalen Bildes des dritten Videos in ein lokales Diskriminierungsnetzwerk zum Erhalten eines dritten Diskriminierungsergebnisses;
(S9025) Berechnen eines Zielverlustwerts des Rauschunterdrückungsnetzwerkmodells gemäß den drei Diskriminierungsergebnissen; und
(S9026) Aktualisieren eines Netzparameterwerts des Rauschunterdrückungsnetzwerkmodells gemäß dem Zielverlustwert zum Erhalten des trainierten Rauschunterdrückungsnetzwerkmodells.

6. Fahrzeugseitiges Videostabilisierungsverfahren nach Anspruch 4, wobei der Schritt des Durchführens der Rauschunterdrückungsverarbeitung aufweist:

(S801) Berechnen eines durchschnittlichen Helligkeitswerts für jedes Einzelbild basierend auf dem Helligkeitswert jedes Pixels des Einzelbilds im fahrzeugmontierten Video; und
(S802) Durchführen der Rauschunterdrückungsverarbeitung an jedem Einzelbild mit einem durchschnittlichen Helligkeitswert unterhalb eines voreingestellten Schwellenwerts basierend auf dem trainierten Rauschunterdrückungsnetzwerkmodell zum Erhalten des entrauschten Videos.

7. Fahrzeugseitiges Videostabilisierungsverfahren nach Anspruch 1, wobei vor dem Schritt des (S201) Erfassens des fahrzeugseitigen Videos das Verfahren ferner aufweist:

(S101) Erfassen eines Trainingsdatensatzes, wobei der Trainingsdatensatz eine Vielzahl von Datenpaaren aufweist, wobei jedes Datenpaar ein erstes Bild und ein zweites Bild aufweist, und das zweite Bild relativ zum ersten Bild ein Zittern aufweist; und
(S102) Trainieren eines unüberwachten neuronalen Netzwerks basierend auf dem Trainingsdatensatz zum Erhalten des trainierten ersten neuronalen Netzwerks.

8. Fahrzeugseitiges Videostabilisierungsverfahren nach Anspruch 7, wobei der Schritt des (S102) Trainierens des unüberwachten neuronalen Netzwerks aufweist:

(S1021) Einspeisen des ersten Bilds und des zweiten Bilds des Datenpaars in das unüberwachte neuronale Netzwerk zum Erhalten eines gitterförmigen dritten Bewegungsvektordiagramms, wobei das dritte Bewegungsvektordiagramm verwendet wird, um einen Verschiebungsvektor jedes Gitters des zweiten Bilds relativ zu jedem Gitter des ersten Bilds darzustellen;

(S1022) Berechnen eines zweiten Bewegungsoptikflussdiagramms gemäß dem dritten Bewegungsvektordiagramm, wobei das zweite Bewegungsoptikflussdiagramm verwendet wird, um eine entsprechende Bewegungsverschiebung jedes Pixelpunkts des zweiten Bilds relativ zu jedem Pixelpunkt des ersten Bilds darzustellen;

(S1023) Durchführen einer bilinearen Interpolationsoperation am zweiten Bild basierend auf dem zweiten Bewegungsoptikflussdiagramm zum Erhalten eines dritten Bilds nach der Bewegung des zweiten Bilds;

(S1024) Berechnen eines Verlustwerts zwischen dem ersten Bild und dem dritten Bild; und

(S1025) Aktualisieren eines Netzparameterwerts des unüberwachten Netzwerks basierend auf dem Verlustwert zum Erhalten des ersten neuronalen Netzwerks.

9. Fahrzeug, aufweisend ein Endgerät (500), wobei das Endgerät (500) einen Speicher (520), einen Prozessor (510) und ein im Speicher (520) gespeichertes und vom Prozessor (510) ausführbares Computerprogramm aufweist, wobei beim Ausführen des Computerprogramms durch den Prozessor (510) der Prozessor veranlasst ist, das fahrzeugseitige Videostabilisierungsverfahren gemäß einem der Ansprüche 1 bis 8 durchzuführen.

10. Computerlesbares Speichermedium, aufweisend ein Computerprogramm, wobei beim Ausführen des Computerprogramms durch einen Prozessor der Prozessor veranlasst ist, das fahrzeugseitiges Videostabilisierungsverfahren gemäß einem der Ansprüche 1 bis 8 durchzuführen.

## Revendications

1. Procédé de stabilisation de vidéo montée sur véhicule, le procédé comprenant les étapes suivantes :

(S601) obtenir une vitesse de déplacement d'un dispositif de photographie pour photographier la vidéo montée sur véhicule lorsque le dispositif de photographie photographie la vidéo montée sur véhicule, et

(S602) rechercher une pluralité de réseaux de neurones pour une concordance de la vitesse de déplacement cible à partir d'un réseau de neurones, et utiliser le réseau de neurones concordant avec la vitesse de déplacement cible comme premier réseau de neurones ;

(S201) obtenir une vidéo montée sur véhicule d'un véhicule ;

(S202) entrer la vidéo montée sur véhicule dans le premier réseau de neurones pour obtenir une pluralité de premiers graphes de vecteur de mouvement sous forme de grille, dans lequel chacun des premiers graphes de vecteur de mouvement est utilisé pour représenter un vecteur de décalage correspondant de chaque grille d'une trame suivante respective d'image de chaque deux trames adjacentes d'images par rapport à chaque grille d'une trame précédente respective d'image des deux trames précédentes dans la vidéo montée sur véhicule ; dans lequel chaque premier graphe de vecteur de mouvement sous forme de grille est construit entre deux trames adjacentes respectives comme présentant un nombre total de S x S grilles, où un S représente le nombre de rangées du graphe en grille ; l'autre S représente le nombre de colonnes du graphe en grille, chaque grille fait une régression de quatre vecteurs de mouvement $\Delta i,j$, où $i \in [0,S)$, $j \in [0,S)$, i représente le nombre de rangées du graphe en grille, j représente le nombre de colonnes du graphe en colonnes, avec finalement pour résultat une matrice de mouvement tridimensionnelle de S x S x3, où chaque dimension dans la matrice de mouvement tridimensionnelle de S x S x3 représente des décalages de mouvement dans une direction x, une direction y, et une direction z ;

(S203) réaliser un traitement de lissage sur le premier graphe de vecteur de mouvement pour obtenir un deuxième graphe de vecteur de mouvement traité, dans lequel le traitement de lissage comprend les étapes suivantes :

- (S2031) obtenir, par rapport à chaque trame d'image de la vidéo montée sur véhicule, les premiers graphes de vecteur de mouvement correspondant respectivement à K trames précédentes et consécutives d'images de la trame actuelle d'image, dans lequel K est un entier positif, et
- (S2032) réaliser un calcul par fusion pondéré sur les premiers graphes de vecteur de mouvement correspondant respectivement aux K trames précédentes et consécutives d'images de l'image de trame actuelle afin d'obtenir le deuxième graphe de vecteur de mouvement ;

(S204) obtenir un premier graphe de fluence optique de mouvement par calcul conformément au deuxième graphe de vecteur de mouvement, dans lequel le premier graphe de fluence optique de mouvement est utilisé pour représenter un déplacement de mouvement correspondant de chaque point de pixel de la trame suivante d'image de chaque deux trames adjacentes d'images dans la vidéo montée sur véhicule par rapport à chaque point de pixel de la trame précédente d'image ; dans lequel l'étape de calcul d'un premier graphe de fluence optique de mouvement conformément au deuxième graphe de vecteur de mouvement comprend :

- (S2041) réaliser une transformation linéaire sur le deuxième graphe de vecteur de mouvement pour obtenir une matrice d'homographie de chaque grille dans le deuxième graphe de vecteur de mouvement, et
- (S2042) calculer le premier graphe de fluence optique de mouvement conformément à la matrice d'homographie de chaque grille dans le deuxième graphe de vecteur de mouvement, dans lequel l'étape pour calculer le premier graphe de fluence optique de mouvement conformément à la matrice d'homographie de chaque grille dans le deuxième graphe de vecteur de mouvement comprend :

-- obtenir, pour chaque grille dans le deuxième graphe de vecteur de mouvement, des coordonnées homogènes correspondant à une pluralité de points de pixel contenus dans la grille projetée sur l'image, et
-- calculer le premier graphe de fluence optique de mouvement conformément à la matrice d'homographie et les coordonnées homogènes correspondant à la pluralité de points de pixel contenus dans la grille projetée sur l'image, et

(S205) réaliser une compensation de mouvement sur une image de trame dans la vidéo montée sur véhicule conformément au premier graphe de fluence optique de mouvement pour obtenir une vidéo présentant des images stabilisées.

2. Procédé de stabilisation de vidéo montée sur véhicule selon la revendication 1, dans lequel le dispositif de photographie est une caméra montée sur un véhicule, et l'étape (S601) obtenant la vitesse de mouvement cible comprend l'étape suivante :

obtenir une vitesse de conduite du véhicule, et déterminer la vitesse de conduite comme étant la vitesse de déplacement cible, lorsque le dispositif de caméra capture la vidéo montée sur véhicule.

3. Procédé de stabilisation de vidéo montée sur véhicule selon la revendication 1, dans lequel avant l'étape (S202) pour entrer la vidéo embarquée sur véhicule dans le premier réseau de neurones, le procédé comprend en outre les étapes suivantes :

entrer la vidéo embarquée sur véhicule dans un modèle de classification de vidéo d'image instable entraîné à traiter afin d'obtenir une valeur de probabilité de la vidéo embarquée de véhicule étant une vidéo avec des images instables, et
réaliser l'étape pour entrer la vidéo embarquée sur véhicule dans le premier réseau de neurones et des étapes consécutives, si la valeur de probabilité est supérieure à un seuil préréglé.

4. Procédé de stabilisation de vidéo montée sur véhicule selon la revendication 1, dans lequel avant l'étape (S202) pour entrer la vidéo embarquée sur véhicule dans le premier réseau de neurones, le procédé comprend en outre les étapes suivantes :

réaliser un traitement de débruitage sur la vidéo embarquée sur véhicule sur la base d'un modèle de réseau débruité entraîné pour obtenir une vidéo embarquée sur véhicule débruitée ;
dans lequel un traitement d'entraînement du modèle de réseau débruité comprend :

(S901) obtenir un jeu de données d'entraînement, dans lequel le jeu de données d'entraînement comprend une pluralité de paires de données, chacune des paires de données comprend N premières images vidéo et N deuxièmes images vidéo, une valeur de luminance correspondant à la première vidéo est inférieure à une valeur de luminance correspondant à la deuxième image vidéo, dans lequel la première vidéo et la deuxième vidéo correspondent respectivement à des objets de photographie différents, et N est un entier positif, et
(S902) réaliser un entraînement itératif sur un modèle de réseau débruité à entraîner sur la base du jeu de données d'entraînement afin d'obtenir le modèle de réseau débruité entraîné.

5. Procédé de stabilisation de vidéo montée sur véhicule selon la revendication 4, dans lequel l'étape pour réaliser l'entraînement itératif sur le modèle de réseau débruité à entraîner sur la base du jeu de données d'entraînement pour obtenir le modèle de réseau débruité entraîné comprend :

(S9021) entrer la première vidéo dans la paire de données dans le modèle de réseau débruité pour obtenir une troisième image vidéo ;

(S9022) entrer la troisième vidéo dans un réseau discriminatif global pour obtenir un premier résultat de discrimination ;

(S9023) entrer la deuxième vidéo dans la paire de données dans le réseau discriminatif global afin d'obtenir un deuxième résultat discriminatif ;

(S9024) entrer une image locale de la troisième vidéo dans un réseau discriminatif local afin d'obtenir un troisième résultat discriminatif ;

(S9025) calculer une valeur de perte cible du modèle de réseau débruité conformément au premier résultat discriminatif, le deuxième résultat discriminatif, et le troisième résultat discriminatif, et

(S9026) mettre à jour un paramètre de réseau du modèle de réseau débruité conformément à la valeur de perte cible afin d'obtenir le modèle de réseau débruité entraîné.

6. Procédé de stabilisation de vidéo montée sur véhicule selon la revendication 4, dans lequel l'étape pour réaliser le traitement de débruitage sur la vidéo embarquée sur véhicule sur la base du modèle de réseau débruité entraîné comprend les étapes suivantes :

(S801) calculer une valeur de luminance moyenne correspondant à la trame d'image sur la base d'une valeur de luminance de chaque pixel dans la trame d'image, pour chaque trame d'image de la vidéo embarquée sur véhicule, et

(S802) réaliser un traitement de débruitage sur chaque trame d'image présentant une valeur de luminance moyenne inférieure à un premier seuil préréglé dans la vidéo embarquée sur véhicule sur la base du modèle de réseau débruité entraîné pour obtenir la vidéo embarquée sur véhicule débruitée.

7. Procédé de stabilisation de vidéo montée sur véhicule selon la revendication 1, dans lequel avant l'étape (S201) pour obtenir la vidéo embarquée sur véhicule du véhicule, le procédé de stabilisation de vidéo montée sur véhicule comprend en outre les étapes suivantes :

(S101) obtenir un jeu de données d'entraînement, dans lequel le jeu de données d'entraînement comprend une pluralité de paires de données, chaque paire de données comprend une première image et une seconde image, et la seconde image présente une gigue par rapport à la première image, et

(S102) entraîner à un réseau de neurones non supervisé sur la base du jeu de données d'entraînement afin d'obtenir le premier réseau de neurones entraîné.

8. Procédé de stabilisation de vidéo montée sur véhicule selon la revendication 7, dans lequel l'étape (S102) pour entraîner le réseau de neurones non supervisé sur la base du jeu de données d'entraînement pour obtenir le premier réseau de neurones entraîné comprend :

(S1021) entrer la première image et la seconde image dans la paire de données dans le réseau de neurones non supervisé afin d'obtenir un troisième graphe de vecteur de mouvement sous forme de graille, dans lequel le troisième graphe de vecteur de mouvement est utilisé pour représenter un vecteur de décalage de chaque grille de la deuxième image par rapport à chaque grille de la première image ;

(S1022) calculer un deuxième graphe de fluence optique de mouvement conformément au troisième graphe de vecteur de mouvement, dans lequel le deuxième graphe de fluence optique de mouvement est utilisé pour représenter un déplacement de mouvement correspondant de chaque point de pixel de la deuxième image par rapport à chaque point de pixel de la première image ;

(S1023) réaliser une opération d'interpolation bilinéaire sur la deuxième image conformément au deuxième diagramme de fluence optique de mouvement afin d'obtenir une troisième image après déplacement de la deuxième image ;

(S1024) calculer une valeur de perte entre la première image et la troisième image, et

(S1025) mettre à jour un paramètre de réseau du réseau non supervisé sur la base de la valeur de perte afin d'obtenir le premier réseau de neurones.

9. Véhicule, comprenant un dispositif terminal (500), le dispositif terminal (500) comprenant une mémoire (520), un processeur (510), et un programme informatique stocké dans la mémoire (520) et exécutable par le processeur (510), dans lequel lorsque le processeur (510) exécute le programme informatique, le processeur est amené à réaliser le procédé de stabilisation de vidéo montée sur véhicule selon l'une quelconque des revendications 1 à 8.

10. Support de stockage lisible par ordinateur, comprenant un programme informatique, dans lequel lorsque le programme informatique est exécuté par un processeur, le processeur est amené à mettre en œuvre le procédé de stabilisation de vidéo montée sur véhicule selon l'une quelconque des revendications 1 à 8.

```
                                                                          S201
┌─────────────────────────────────────────────────────────────┐
│          Vehicle-mounted video of a vehicle is obtained       │
└─────────────────────────────────────────────────────────────┘
                              │
                              ▼                                   S202
┌─────────────────────────────────────────────────────────────┐
│   The vehicle-mounted video is input into a first neural      │
│   network to obtain a plurality of grid-shaped first motion   │
│   vector graphs, where the first motion vector graph is used  │
│   for representing an offset vector corresponding to the next  │
│   frame of image of every two adjacent frame image in the     │
│   vehicle-mounted video with respect to each grid of the      │
│   previous frame of image                                     │
└─────────────────────────────────────────────────────────────┘
                              │
                              ▼                                   S203
┌─────────────────────────────────────────────────────────────┐
│   Smoothing processing is performed on the first motion       │
│   vector graph to obtain a processed second motion vector     │
│   graph                                                       │
└─────────────────────────────────────────────────────────────┘
                              │
                              ▼                                   S204
┌─────────────────────────────────────────────────────────────┐
│   The first motion optical flow graph is calculated according │
│   to the second motion vector graph. The first motion optical │
│   flow graph is used to represent a motion displacement       │
│   corresponding to each pixel of the next frame of image of   │
│   every two adjacent frames of images in the vehicle-mounted  │
│   video with respect to each pixel of the previous frame of   │
│   image.                                                      │
└─────────────────────────────────────────────────────────────┘
                              │
                              ▼                                   S205
┌─────────────────────────────────────────────────────────────┐
│   Motion compensation is performed on the frame image in the  │
│   vehicle-mounted video according to the first motion optical │
│   flow diagram to obtain the video with stable images         │
└─────────────────────────────────────────────────────────────┘
```

FIG. 1

FIG. 2

S2041

Linear transformation is performed on the second motion vector graph to obtain a homography matrix of each grid in the second motion vector graph

S2042

First motion optical flow graph is calculated according to the homography matrix of each grid in the second motion vector graph

FIG. 3

400

410
First obtaining module

420
Network processing module

430
Smoothing processing module

440
Calculation module

450
Motion compensation module

FIG. 4

500

510

Memory

Processor

520

Computer program

Terminal device

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- DIGITAL VIDEO SEQUENCE STABILIZATION BASED ON 2.5D MOTION ESTIMATION AND INERTIAL MOTION FILTERING. **JIN J S et al.** REAL-TIME IMAGING. ACADEMIC PRESS LIMITED, 01 August 2001, vol. 7, 357-365